# EUROPÄISCHE PATENTANMELDUNG

(11) **EP 2 400 645 A2**
(43) Veröffentlichungstag der Anmeldung: **28.12.2011**
(21) Anmeldenummer: 11004007.8
(22) Anmeldetag: 14.05.2011
(51) Int. Cl.: H02M 3/335

(54) **Zwischenkreis-Gleichstromumrichter**

(30) Priorität: 24.06.2010 DE 102010024679
(71) Anmelder: KACO new energy GmbH, 74172 Neckarsulm (DE)
(72) Erfinder: Phlippen, Dr. Frank, 34346 Hann. Münden (DE); Faßhauer, Heiko, 37235 Hessisch Lichtenau (DE)
(74) Vertreter: Baumann, Jörg

(57) **Zusammenfassung**

Der Gleichstromsteller ist mit einem Eingang, an dem eine Eingangsspannung anliegt, mit Schaltern (S1,S2) und wenigstens einer Induktivität (5) versehen. Am Ausgang des Gleichstromstellers liegt eine Ausgangsspannung an. Ein Transformator (9) des Gleichstromstellers hat Wicklungen (6,7), die gegensinnig zueinander gewickelt und in Reihe zu den Schaltern (S1,S2) und zur Induktivität liegen. Die Schalter (S1,S2) sind abwechselnd, aber während einer Überlappungszeit auch gleichzeitig geschlossen. Wenn der durch die Induktivität (5) fließende Strom einen bestimmten Stromwert unterschreitet, werden beide Schalter (S1,S2) geschlossen, so dass der durch die Induktivität (5) fließende Strom wieder zunimmt.

## Beschreibung

Die Erfindung betrifft einen Gleichstromsteller nach dem Oberbegriff des Anspruches 1.

Gleichstromsteller wandeln eine konstante Eingangsspannung durch periodisches Schalten so um, dass am Ausgang ein anderer Spannungswert entsteht. Solche Gleichstromsteller werden unter anderem in der elektrischen Antriebs- und Stromversorgungstechnik eingesetzt. Bei einem Hochsetzsteller als Gleichstromsteller ist die Ausgangsspannung stets größer als die Eingangsspannung. Der Gleichstromsteller hat einen Schalter, eine Diode als Passivschalter sowie ein Induktivität in Form einer Spule. Ist der Schalter geschlossen, fließt der Strom vom Eingang über die Spule und den geschlossenen Schalter. Dies hat zur Folge, dass der Strom in der Induktivität größer und diese Induktivität geladen wird. Der Ausgang des Gleichstromstellers wird nicht mit Spulenstrom versorgt. Wird der Schalter geöffnet, leitet der passive Schalter (Diode) den Strom vom Eingang zum Ausgang des Gleichstromstellers. Die Energie, die im Magnetfeld der Induktivität gespeichert ist, wird über den Ausgang an den Verbraucher abgegeben. Die Eingangsspannung sowie die Selbstinduktionsspannung der Spule addieren sich zu einer insgesamt höheren Spannung. Der Eingang des Gleichstromstellers wird kontinuierlich mit Strom belastet, während der Ausgang lediglich phasenweise mit Spulenstrom versorgt wird, wenn der Schalter geöffnet ist.

Ein solcher hochsetzender Gleichstromsteller hat keine galvanische Trennung und ermöglicht nur einen unidirektionalen Betrieb.

Der Erfindung liegt die Aufgabe zugrunde, den gattungsgemäßen Gleichstromsteller so auszubilden, dass er kostengünstig hergestellt werden kann, mit nur geringen Verlusten arbeitet, vorteilhaft einen bidirektionalen Betrieb ermöglicht und eine galvanische Trennung zwischen Ein- und Ausgangsspannung sicherstellt.

Diese Aufgabe wird beim gattungsgemäßen Gleichstromsteller erfindungsgemäß mit den kennzeichnenden Merkmalen des Anspruches 1 gelöst.

Beim erfindungsgemäßen Gleichstromsteller sind die Wicklungen des Transformators gegensinnig zueinander gewickelt und liegen in Reihe zu den Schaltern und zur Induktivität. Die Schalter werden abwechselnd ein-und ausgeschaltet, können aber auch während einer Überlappungszeit gleichzeitig geschlossen sein. Dies ist dann der Fall, wenn der durch die Induktivität fließende Strom einen bestimmten Stromwert unterschreitet. Dann werden beide Schalter geschlossen, so dass der durch die Induktivität fließende Strom wieder zunimmt. Die Länge dieser überlappenden Schaltzeit beeinflusst die Ausgangsspannung. Je länger die Überlappungszeit ist, desto größer ist die Ausgangsspannung.

Der Transformator ist seinerseits Teil eines Gleichrichters.

Der Gleichrichter weist vorteilhaft Schalter auf, mit denen die Richtung des Stromflusses durch den Gleichrichter umgeschaltet werden kann.

Hierbei wird je nach Stromrichtung durch den Gleichrichter Spannung in der einen oder anderen Wicklung induziert.

Wenn die beiden Schalter geschlossen sind, entsteht in der Summe auf Grund der gegensinnigen Wicklungen die induzierte Gesamtspannung in der Größe von zumindest annähernd 0. Dadurch liegt in der Induktivität die Eingangsspannung des Gleichstromstellers an. Wird nun einer der beiden Schalter geöffnet, fließt der Strom über die eine Wicklung und den geschlossenen Schalter, wodurch eine Spannung in der Wicklung induziert wird. Die Höhe der Spannung an der Wicklung entspricht der Zwischenkreisspannung geteilt durch das Übersetzungsverhältnis des Transformators.

Die Schalter des Gleichrichters, mit denen die Stromflussrichtung verändert werden kann, sind vorteilhaft paarweise parallel geschaltet. Die Schalter können beispielsweise Leistungs-MOSFETs sein. Es können aber auch IGBTs, Thyristoren oder andere Schalter eingesetzt werden.

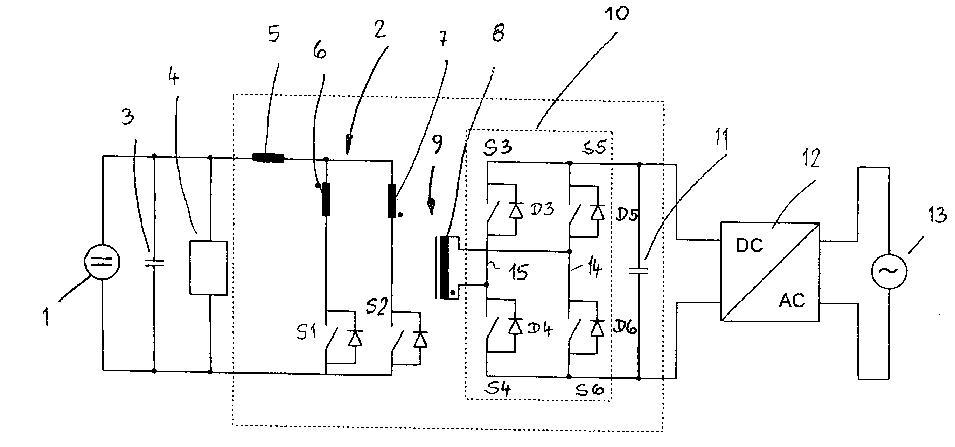

Weitere Merkmale der Erfindung ergeben sich aus den weiteren Ansprüchen, der Beschreibung und der Zeichnung.

Die Zeichnung zeigt ein Schaltbild eines erfindungsgemäßen hochsetzenden Gleichstromstellers mit galvanischer Trennung.

Der Gleichstromsteller wird beispielsweise bei batteriebetriebenen Wechselrichtern oder bei Photovoltaikwechselrichtern eingesetzt. Der Gleichstromsteller ist als hochsetzender Gegentaktwandler ausgebildet, dessen Hochsetzverhalten weitgehend unabhängig vom Übersetzungsverhältnis des Übertragers ist. Der Gleichstromsteller hat eine Gleichstrom/Spannungsquelle 1 (im Folgenden Quelle genannt), die beispielsweise eine Batterie oder auch eine Brennstoffzelle sein kann. Sie ist an den Eingang eines DC/DC-Wandlers 2 angeschlossen. Zur Filterung des Stroms der Quelle 1 ist in der Regel ein Filter 3 und ein EMV-Filter 4 vorgesehen, mit denen die Eingangsspannung der Quelle 1 gefiltert wird, um eine möglichst glatte Gleichspannung zu erzeugen. Als Filter 3 wird beispielsweise ein Kondensator eingesetzt.

Der DC-DC-Wandler 2 hat eine Induktivität 5, die vorzugsweise eine Spule ist und der zwei Wicklungen 6, 7 nachgeschaltet sind. Die Wicklungen 6, 7 liegen jeweils in Reihe zu einem Schalter S1, S2, der jeder geeignete Schalter sein kann, beispielsweise ein MOSFET-Schalter, ein IGBT, ein Thyristor oder ein anderes Schaltelement. Beide Schalter S1 und S2, die parallel zueinander liegen, können unabhängig voneinander geschaltet werden.

Die Wicklungen 6, 7 sind gegensinnig gewickelt. Dadurch sind auch die induzierten Spannungen entgegengesetzt zueinander gerichtet, so dass sie einander.im Wesentlichen aufheben und auf diese Weise ein Spannungsabfall vermieden wird.

Die Wicklungen 6, 7 sind zusammen mit einer Wicklung 8 auf einem gemeinsamen Kern eines Transformators 9. Die Wicklung 8 des Transformators 9 kann eine Mehrfachwicklung sein.

Dem Transformator 9 ist ein Gleichrichter 10 nachgeschaltet. Er hat jeweils zwei in Reihe liegende Schalter S3 bis S6. Die Schalter S3, S4 sind parallel zu den Schaltern S5, S6 geschaltet, die ihrerseits in Reihe liegen. Jedem Schalter S3 bis S6 parallel geschaltet ist eine Diode D3 bis D6. Mit den Schaltern S3 bis S6 kann in noch zu beschreibender Weise die Richtung des Stromflusses verändert werden.

An den Gleichrichter 10 ist über einen Kondensator 11 und einen DC/AC-Wandler 12 eine Wechselstromquelle oder Last 13 angeschlossen, zum Beispiel eine Niederspannungsquelle, ein Motor, eine Lampe, ein Inselnetz und dergleichen. Der Kondensator 11 ist ein Glättungskondensator, der die Spannung am Ausgang des Gleichstromstellers glättet. Kondensator 11, DC/AC Wandler 12 und Last/Quelle 13 sind für die Funktion des erfindungsgemäßen Gleichstromstellers nicht erforderlich.

Die Wicklung 8 des Transformators 9 ist an einen Leitungszweig 14 sowie an einen Leitungszweig 15 des Gleichrichters 10 angeschlossen. Im Leitungszweig 14 sitzen die Schalter S5, S6 und die zugehörigen Dioden D5 und D6. Im anderen Leitungszweig 15 liegen die Schalter S3, S4 sowie die Dioden D3, D4.

Im Folgenden wird die Wirkungsweise des Gleichstromwandlers beispielhaft beschrieben. Die Quelle 1 ist eine Batterie, die geladen werden soll. Die Schalter S3, S6 werden geschlossen, während die Schalter S4 und S5 geöffnet bleiben. Der von der Quelle 13 kommende Strom fließt somit über den Schalter S3, über die Wicklung 8 des Transformators und über den geschlossenen Schalter S6 zurück in Richtung auf die Quelle 13. Aufgrund des beschriebenen Stromflusses wird an der Wicklung 6 des DC/DC-Wandlers 2 eine Spannung induziert, die bei ausreichend kleiner Spannung der Quelle 1 zu einem Stromfluss in der Induktivität 5 führt.

Der Transformator 9 erzeugt beispielhaft ein Übersetzungsverhältnis von 1:10. Die Batterie 1 ist beispielsweise eine 24 Volt-Batterie. Die Oberspannungsseite des Transformators 9 wird beispielhaft an eine Zwischenkreisspannung von 400 Volt angelegt, die ein üblicher Wert ist. Auf Grund des Übersetzungsverhältnisses von 1:10 des Transformators 9 entsteht an der Wicklung 6 eine Spannung von 40 Volt. Sie führt zu einem Stromfluss in der Induktivität 5 in Richtung auf die Batterie 1, die auf diese Weise mit dem Strom geladen wird.

Im Gleichrichter 10 können auch die Schalter S4, S5 geschlossen werden, während die beiden anderen Schalter S3, S6 geöffnet werden. Der Stromfluss von der Quelle 13 erfolgt somit über den geschlossenen Schalter S4 zur Wicklung 8 des Transformators 9 und über den geschlossenen Schalter S5 zurück in Richtung auf die Quelle 13. Bei dieser Stromrichtung wird an der Wicklung 7 eine Spannung induziert, die ebenfalls zu einem Stromfluss durch die Induktivität 5 führt. Die Batterie wird somit auch bei dieser Stromrichtung geladen. Über das Verhältnis von Einschaltdauer zu Gesamtperiodendauer kann der Strom in der Induktivität 5 eingestellt werden. Je größer das Verhältnis ist, desto größer ist der Strom in der Induktivität 5 bzw. die Spannung an der Quelle 1.

Die Batterie 1 kann auch Strom in den Zwischenkreis liefern. Die Schalter S1, S2 werden geschlossen. Auf Grund der gegensinnig gewickelten Wicklungen 6, 7 entsteht in der Summe eine Spannung von 0. Darum liegt an der Induktivität 5 die Batteriespannung an, im Beispielsfall 24 Volt. Wird der Schalter S1 geöffnet, dann fließt der Strom in der Induktivität über die Wicklung 7 durch den geschlossenen Schalter S2. Die Dioden D4 und D5 gehen in den leitenden Zustand über, und dadurch wird in der Wicklung 7 eine Spannung induziert, die der Zwischenkreisspannung geteilt durch das Übersetzungsverhältnis des Transformators 9 entspricht. Bei den beispielhaft angegebenen Werten wird somit in der Wicklung 7 eine Spannung von 40 Volt induziert. Mit der Zeit nimmt der Batteriestrom durch die Induktivität 5 ab. Sobald ein gegebener Stromwert unterschritten wird, wird der Schalter S1 geschlossen. Nunmehr sind beide Schalter S1, S2 geschlossen, wodurch auf Grund der gegensinnigen Wicklungen 6, 7 die Gesamtspannung von 0 entsteht. Dadurch steigt der durch die Induktivität 5 fließende Strom wieder an. Es wird dann der Schalter S2 geöffnet und der Schalter S1 geschlossen gehalten. Der Batteriestrom fließt nunmehr über die Induktivität 5 und die Wicklung 6 zum geschlossenen Schalter S1. Die Dioden D3 und D6 gehen in den leitenden Zustand über und an der Wicklung 6 wird eine Spannung induziert, die der Zwischenkreisspannung geteilt durch das Übersetzungsverhältnis des Transformators 9 entspricht.

Auf die beschriebene Weise werden die Schalter S1 und S2 abwechselnd geöffnet. Die Schalter S1, S2 bleiben beide geschlossen, wenn der Batteriestrom einen vorgegebenen Wert unterschreitet und der durch die Induktivität 5 fließende Batteriestrom wieder ansteigen soll.

Die Schalter S1 und S2 haben einander überlappende Schaltzeiten, in denen beide Schalter geschlossen sind. Die Länge dieser Überlappungszeit beeinflusst die Ausgangsspannung der Schaltung. Je größer die Überlappungszeit ist, desto größer ist auch die Ausgangsspannung.

Der beschriebene hochsetzende Gegentaktwandler zeichnet sich durch seine konstruktive Einfachheit aus. Er kommt mit wenigen Bauteilen aus und arbeitet mit nur geringen Verlusten und ermöglicht einen bidirektionalen Betrieb. Die Ausgangsspannung des Gegentaktwandlers lässt sich durch die Länge der Überlappungszeit einstellen, in der die beiden Schalter S1, S2 geschlossen sind. Außerhalb dieser Überlappungszeiten ist jeweils nur einer der Schalter S1 oder S2 geschlossen. Der Gegentaktwandler weist ein Hochsetzverhalten auf, das weitgehend unabhängig vom Übersetzungsverhältnis des eingesetzten Transformators 9 ist. Außerdem bietet der Wandler eine galvanische Trennung zwischen seinem Eingang und seinem Ausgang.

Im beschriebenen Ausführungsbeispiel arbeitet der Gleichstromsteller bidirektional. Ein unidirektionaler Betrieb der erfindungsgemäßen Schaltung wird durch Entfernen der Schalter S3 bis S6 erreicht.

## Patentansprüche

1. Gleichstromsteller mit einem Eingang, an dem eine Eingangsspannung anliegt, mit wenigstens einem Schalter (S1, S2) und wenigstens einer Induktivität (5), mit einem Ausgang, an dem eine Ausgangsspannung anliegt, und einem Transformator (9) mit Wicklungen (6 bis 8), **dadurch gekennzeichnet, dass** die Wicklungen (6, 7) des Transformators (9) gegensinnig zueinander gewickelt und in Reihe zu den Schaltern (S1, S2) und zur Induktivität (5) liegen, und dass die Schalter abwechselnd, aber auch während einer Überlappungszeit gleichzeitig geschlossen sind.

2. Gleichstromsteller nach Anspruch 1,
**dadurch gekennzeichnet, dass** der Transformator (9) Teil eines Gleichrichters (10) ist.

3. Gleichstromsteller nach Anspruch 1 oder 2,
**dadurch gekennzeichnet, dass** der Gleichrichter (10) Schalter (S3 bis S6) aufweist, mit denen die Richtung des Stromflusses durch den Gleichrichter (10) umschaltbar ist.

4. Gleichstromsteller nach einem der Ansprüche 1-3,
**dadurch gekennzeichnet, dass** je nach Stromrichtung durch den Gleichrichter (10) in der einen oder anderen Wicklung (6, 7) eine Spannung induzierbar ist.

5. Gleichstromsteller nach einem der Ansprüche 1 bis 4,
**dadurch gekennzeichnet, dass** bei geschlossenem Schalter (S1, S2) die Gesamtspannung der in den Wicklungen (6, 7) induzierten Spannungen zumindest annähernd 0 ist.

6. Gleichstromsteller nach einem der Ansprüche 1 bis 5,
**dadurch gekennzeichnet, dass** die Schalter (S1 bis S6) MOSFETs oder IGBTs sind.
